# EUROPEAN PATENT APPLICATION

(11) **EP 4 009 266 A1**
(43) Date of publication of application: **08.06.2022**
(21) Application number: 21856142.1
(22) Date of filing: 06.08.2021
(51) Int. Cl.: G06Q 50/12, G06Q 50/10, G06Q 10/00, G08B 21/18

(54) **SYSTEM AND METHOD FOR OPERATING UNMANNED CAFE**

(30) Priority: 14.08.2020 KR 20200102146
(71) Applicant: Vision Semicon Co., Ltd., Daejeon 34026 (KR)
(72) Inventor: YOON, Soo Jung, Sejong 30064 (KR)
(74) Representative: RGTH
(86) International application number: PCT/KR2021/010388
(87) International publication number: WO 2022/035136

(57) **Abstract**

There is provided an unmanned cafe management system including a making device, an error control device to, when receiving an error signal of the making device, control the making device into disabled state and generate an error occurrence signal, an inspection management device to receive input of a management completion signal, measure an elapsed time and generate a management request signal when the elapsed time reaches a time interval according to a management request ratio to a management cycle, and a manager terminal device to receive and output the error occurrence signal or the management request signal.

## Description

### [Technical Field]

The present disclosure relates to an unmanned cafe management system and method, and more particularly, to an unmanned cafe management system and method for detecting an error occurred from a making device and checking the elapsed time since the last management of the making device on a manager's terminal.

### [Background Art]

In these modern times, there is a growing interest in unmanned services for providing desired products or services to customers irrespective of place and time.

In this circumstance, there is a growing number of cafes that sell coffee without staffs using the existing automatic dispensers. However, such cafes have difficulties in checking the condition of coffee making machine in real time. Here, in the case of common unmanned cafes, when an error occurs in coffee making machine, a customer notifies the error to a manager via text or a call, and subsequently, the manager visits the cafe to check the condition of the machine. In this case, the cafe does not normally operate for a long time.

Accordingly, there is a need for approach to notify an error in coffee making machine to a manager in real time and replace the faulty machine to maintain the normal operation of the cafe.

### [Disclosure]

### [Technical Problem]

The present disclosure is directed to providing an unmanned cafe management system and method for detecting an error occurred from a making device and checking the elapsed time since the last management of the making device on a manager's terminal.

### [Technical Solution]

An aspect of the present disclosure provides an unmanned cafe management system, and the unmanned cafe management system may include a making device provided to make at least one type of menu, an error control device to, when receiving an error signal generated by a malfunction of the making device, control the making device into disabled state in response to the error signal, and generate an error occurrence signal for the making device, an inspection management device to receive input of a management completion signal for the making device from a manager, measure an elapsed time since generation of the management completion signal, compare the elapsed time with a preset management cycle, and generate a management request signal when the elapsed time reaches a time interval according to a management request ratio to the management cycle, and a manager terminal device to receive and output the error occurrence signal or the management request signal.

Additionally, the inspection management device may control the making device into the disabled state when the measured elapsed time since the generation of the management completion signal reaches the management cycle.

Additionally, when there is a plurality of making devices of a same type, the error control device may generate a warning signal which is classified into at least one level according to a ratio of the number of making devices in which the error signal was generated to the number of making devices.

Additionally, the error control device may preset a weight according to usage frequency for different types of making devices, and generate the warning signal by applying the weight to the ratio of the number of making devices in which the error signal was generated to the number of making devices.

Additionally, the inspection management device may preset a weight for a making booth in which a plurality of making devices is equipped, generate a making booth management cycle by applying the weight to the management cycle, measure the elapsed time since the generation of the management completion signal for the making booth, compare the elapsed time with the making booth management cycle, and generate the management request signal for the making booth when the elapsed time reaches the time interval according to the management request ratio to the making booth management cycle.

Additionally, the inspection management device may preset a weight according to usage frequency for different types of making devices, generate each making device management cycle according to the type of the making device by applying the weight to the management cycle, measure the elapsed time since the generation of the management completion signal for the making device, compare the elapsed time with the making device management cycle, and generate the management request signal for the making device when the elapsed time reaches the time interval according to the management request ratio to the making device management cycle.

Additionally, the error control device may generate error information to indicate the making device in which the error signal was generated and the time when the error signal was generated, and store the generated error information.

Additionally, the error control device may calculate an error cycle indicating a time interval at which error signals are generated according to a plurality of adjacent error information generated in a same making device.

Additionally, the error control device may generate an inspection request signal according to the calculated error cycle when the time interval elapsed since generation of the previous error signal of the making device reaches the error cycle.

Another aspect of the present disclosure provides an unmanned cafe management method using a making device provided to make at least one type of menu, and the unmanned cafe management method may include receiving an error signal generated by a malfunction of the making device, controlling the making device into disabled state in response to the error signal, generating an error occurrence signal for the making device, and receiving and outputting the error occurrence signal.

Still another aspect of the present disclosure provides an unmanned cafe management method using a making device provided to make at least one type of menu, and the unmanned cafe management method may include receiving input of a management completion signal for the making device from a manager, measuring an elapsed time since generation of the management completion signal, comparing the elapsed time with a preset management cycle, generating a management request signal when the elapsed time reaches a time interval according to a management request ratio to the management cycle, and receiving and outputting the management request signal.

Additionally, generating the management request signal may include controlling the making device into disabled state when the measured elapsed time since the generation of the management completion signal reaches the management cycle.

### [Advantageous Effects]

According to an aspect of the present disclosure, with the unmanned cafe management system and method, it is possible to detect an error occurred from a making device and check the elapsed time since the last management of the making device on a manager's terminal.

### [Description of Drawings]

FIG. 1 is a schematic diagram of an unmanned cafe management system according to an embodiment of the present disclosure.
FIG. 2 is a control block diagram of an error control device of FIG. 1.
FIG. 3 is a control block diagram of an inspection management device of FIG. 1.
FIG. 4 is a block diagram showing a process of controlling the operating condition of a making device by an error control unit of FIG. 2.
FIG. 5 is a block diagram showing a process of controlling the operating condition of a making device by an inspection control unit of FIG. 3.
FIG. 6 is a block diagram showing a process of outputting the condition of a making device by a manager terminal device of FIG. 1.
FIGS. 7 and 8 are flowcharts of an unmanned cafe management method according to an embodiment of the present disclosure.

### [Best Mode]

The following detailed description of the present disclosure is made with reference to the accompanying drawings, in which particular embodiments for practicing the present disclosure are shown for illustration purposes. These embodiments are described in sufficiently detail for those skilled in the art to practice the present disclosure. It should be understood that various embodiments of the present disclosure are different but do not need to be mutually exclusive. For example, particular shapes, structures and features described herein in connection with one embodiment may be implemented in other embodiment without departing from the spirit and scope of the present disclosure. It should be further understood that changes may be made to the positions or placement of individual elements in each disclosed embodiment without departing from the spirit and scope of the present disclosure. Accordingly, the following detailed description is not intended to be taken in limiting senses, and the scope of the present disclosure, if appropriately described, is only defined by the appended claims along with the full scope of equivalents to which such claims are entitled. In the drawings, similar reference signs denote same or similar functions in many aspects.

Hereinafter, preferred embodiments of the present disclosure will be described in more detail with reference to the accompanying drawings.

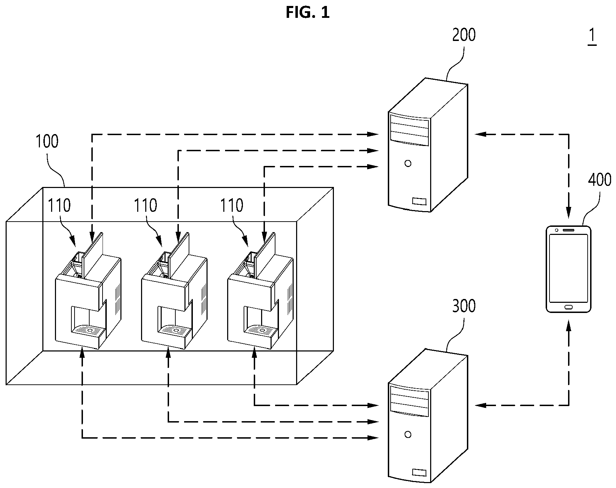

FIG. 1 is a schematic diagram of an unmanned cafe management system according to an embodiment of the present disclosure.

The unmanned cafe management system 1 may include a making device 110, an error control device 200, an inspection management device 300 and a manager terminal device 400.

The making device 110 may be provided to make at least one type of menu. To this end, different types of making devices 110 may be provided according to at least one material required for one type of menu.

For example, the making device 110 may include different types of making devices 110 including a coffee machine, an ice machine, a cup dispenser, a syrup dispenser, an undiluted solution/source dispenser, a carbonated water dispenser and a cold brew dispenser.

Here, the coffee machine may be the making device 110 which grinds roasted coffee beans and allows high temperature water to pass through the ground coffee beans to pull espresso shots, and the coffee machine may be the making device 110 which applies pressure to steamed milk to cause it to foam.

Additionally, the dispenser may be the making device 110 provided to dispense a predetermined amount of materials stored in the dispenser.

The making device 110 may be a device provided to make at least one menu in most of cafes.

In this instance, the making device 110 may generate an error signal when a malfunction occurs, and here, the malfunction may be a failure to function of the making device 110.

For example, the coffee machine may generate the error signal when beans run out or water pressure problems occur. As described above, even when materials run out, the making device 110 may generate the error signal.

Meanwhile, the making device 110 may separately generate a deficiency signal indicating that materials used in the making device 110 run out and an error signal indicating that a malfunction occurred.

In this case, when beans run out, the coffee machine may generate the deficiency signal, and when a water pressure problem occurs, the coffee machine may generate the error signal.

In relation to this, unique identification information may be given to each making device 110 to identify different types of making devices 110. In this case, the making device 110 may transmit the error signal including the identification information or the deficiency signal including the identification information to an external device, such as the error control device 200, connected to the making device 110.

Meanwhile, the unmanned cafe management system 1 may further include a making booth 100 in which a plurality of making devices 110 is equipped, and here, the making booth 100 may refer to a space in which the plurality of making devices 110 is equipped.

When the error control device 200 receives the error signal generated by the malfunction of the making device 110, the error control device 200 may control the making device 110 into disabled state in response to the error signal, and the error control device 200 may generate an error occurrence signal for the making device 110 having transmitted the error signal.

Here, the error control device 200 may be provided to recognize the error signal generated in the making device 110.

In this instance, the error control device 200 is wiredly connected to the plurality of making devices 110, and when the error control device 200 receives the error signal from each of the plurality of making devices 110, the error control device 200 may identify each making device 110 according to the location of terminals at which the plurality of making devices 110 is connected to the error control device 200.

Additionally, the error control device 200 is wiredly or wirelessly connected to the plurality of making devices 110, and may identify each making device 110 upon receiving the error signal including the identification information from the plurality of making devices 110.

Meanwhile, controlling the making device 110 into disabled state by the error control device 200 may comprise controlling to power off the making device 110 by the error control device 200, or interrupting the input power of the making device 110 by the error control device 200.

Additionally, controlling the making device 110 into disabled state by the error control device 200 may comprise controlling to make use of a different making device 110 of the same type as the making device 110 in which the error signal was generated in the menu making process.

In relation to this, when the error control device 200 controls the making device 110 or the making booth 100 into disabled state, the error control device 200 may control a kiosk provided to allow customers to take orders in the cafe to output a disabled service message.

Here, controlling the kiosk to output the disabled service message may be understood as controlling to disallow customers from taking orders, and to this end, the error control device 200 may be connected to the kiosk via a wireless or wired network to transmit a disabled service signal, and in this case, the kiosk may be provided to output the disabled service message in response to the disabled service signal transmitted from the error control device 200.

Additionally, the error control device 200 may be connected, via the wireless or wired network, to a server connected to the kiosk via the wireless or wired network, to transmit the disabled service signal, and in this case, the kiosk may be provided to receive the disabled service signal from the server and output the disabled service message in response to the received disabled service signal.

Meanwhile, when the error signal is removed from the making device 110, the error control device 200 may control to re-operate the corresponding making device 110.

When there is a plurality of making devices 110 of the same type, the error control device 200 may generate a warning signal which is classified into at least one level according to a ratio of the number of making devices 110 in which the error signal was generated to the number of making devices 110.

For example, the warning signal may be classified into three levels, and in this case, the first warning signal may be generated when the error signal is generated in 1/3 of the making devices 110 of the same type, the second warning signal may be generated when the error signal is generated in 2/3 of the making devices 110 of the same type, and the third warning signal may be generated when the error signal is generated in 3/4 of the making devices 110 of the same type.

The error control device 200 may preset a weight according to the usage frequency for each of different types of making devices 110.

Accordingly, the error control device 200 may generate the warning signal by applying the preset weight to the ratio of the number of making devices 110 in which the error signal was generated to the number of making devices 110 of the same type.

For example, the error control device 200 may set a smaller weight to the making device 110 having relatively high usage frequency, and the error control device 200 may set a larger weight to the making device 110 having relatively low usage frequency.

In this instance, the weight may be set to a value between 0 and 1, and may be applied by multiplying the ratio given to generate the warning signal by the weight. In this case, it may be understood that the error control device 200 generates the warning signal when the error signal is generated in a larger number of making devices 110 of the same type with a relatively large weight than the making device 110 with a relatively small weight.

The error control device 200 may generate error information to indicate the making device 110 in which the error signal was generated and the time at which the error signal was generated, and the error control device 200 may store the generated error information.

The error control device 200 may calculate an error cycle indicating a time interval at which error signals are generated according to a plurality of adjacent error information generated in the same making device.

Here, the error cycle may be a time difference of error signals found from the adjacent error information, and when there is a plurality of time differences of error signals, the error control device 200 may calculate the error cycle by calculating the average of the time differences of error signals.

In this instance, when a time difference of a plurality of error signals and a time difference of a single error signal are outside of a preset threshold, the error control device 200 may calculate the error cycle except the time difference of the single error signal.

Additionally, when a time difference of a plurality of error signals and a time difference of a plurality of other error signals outside of the preset threshold are calculated, the error control device 200 may calculate the error cycle using a time difference of a larger number of error signals.

Accordingly, the error control device 200 may generate an inspection request signal according to the calculated error cycle when the time interval elapsed since generation of the previous error signal of the corresponding making device 110 reaches the error cycle.

Here, the error control device 200 may calculate the error cycle for each of different types of making devices 110, and accordingly, the error control device 200 may generate the inspection request signals for different types of making devices 110 according to the calculated error cycle.

Meanwhile, the error control device 200 may receive input of information such as weight and ratio used in the error control device 200 from a manager, or the error control device 200 may receive input information of the manager terminal device 400 such as weight and ratio from the manager terminal device 400.

The inspection management device 300 may receive input of a management completion signal for the making device 110 from the manager, and the inspection management device 300 may measure an elapsed time since the generation of the management completion signal and compare the elapsed time with a preset management cycle, and the inspection management device 300 may generate a management request signal when the elapsed time reaches the time interval according to a management request ratio to the management cycle.

Here, the inspection management device 300 may be provided to receive the input of the management completion signal using a switch and a button, and additionally, the inspection management device 300 may receive the management completion signal from the manager terminal device 400 in response to an inspection completion input from the manager terminal device 400.

Additionally, the preset management cycle may be set as a time cycle recommended to inspect the making device 110.

For example, the preset management cycle may be set to 24 hours. In this case, the inspection management device 300 may generate the management request signal when 24 hours have passed since the generation of the previous management completion signal.

Meanwhile, the management request ratio may be represented as a ratio of the elapsed time since the generation of the management completion signal to the management cycle.

For example, the management request ratio may be set to 75%, and in this instance, in case that the management cycle is set to 24 hours and the management request ratio is set to 75%, the inspection management device 300 may generate the management request signal when 18 hours have passed since the generation of the previous management completion signal.

In relation to this, the inspection management device 300 may generate the management request signal which is classified into at least one level according to one or more different management request ratios.

For example, the management request signal may be classified into three levels, and in this instance, in case that the management cycle is set to 24 hours, at the first management request ratio set to 91.6%, the first management request signal may be generated when 22 hours have passed since the generation of the previous management completion signal, at the second management request ratio set to 95.8%, the second management request signal may be generated when 23 hours have passed since the generation of the previous management completion signal, and at the third management request ratio set to 100%, the third management request signal may be generated when 24 hours have passed since the generation of the previous management completion signal.

The inspection management device 300 may preset a weight for the making booth 100 in which the plurality of making devices 110 is equipped, and the inspection management device 300 may generate a making booth management cycle by applying the weight to the management cycle.

Accordingly, the inspection management device 300 may measure the elapsed time since the generation of the management completion signal for the making booth 100 and compare the elapsed time with the making booth management cycle, and the inspection management device 300 may generate the management request signal for the making booth 100 when the elapsed time reaches the time interval according to the management request ratio to the making booth management cycle.

Here, the inspection management device 300 may be provided to receive input of the management completion signal for the making booth 100 using the switch and the button, and additionally, the inspection management device 300 may receive the management completion signal for the making booth 100 from the manager terminal device 400 in response to a management completion input for the making booth 100 from the manager terminal device 400.

The inspection management device 300 may preset the weight according to the usage frequency of different types of making devices, and the inspection management device 300 may generate each making device management cycle according to the type of the making device 110 by applying the weight to the management cycle.

Accordingly, the inspection management device 300 may measure the elapsed time since the generation of the management completion signal for the making device 110 and compare the elapsed time with the making device management cycle, and the inspection management device 300 may generate the management request signal for the making device 110 when the elapsed time reaches the time interval according to the management request ratio to the making device management cycle.

For example, the inspection management device 300 may set a smaller weight to the making device 110 having relatively high usage frequency, and the inspection management device 300 may set a larger weight to the making device 110 having relatively low usage frequency.

In this instance, the weight may be set to a value between 0 and 1, and the management cycle may be multiplied by the weight. In this case, it may be understood that when a longer time passes on the making device 110 with a relatively large weight than the making device 110 with a relatively small weight, the inspection management device 300 generates the management request signal for the corresponding making device 110.

Meanwhile, the inspection management device 300 may control the making device 110 or the making booth 100 into disabled state when the measured elapsed time since the generation of the management completion signal for the making device 110 or the making booth 100 reaches the management cycle.

Here, controlling the making device 110 into disabled state by the inspection management device 300 may comprise controlling to power off the making device 110 by the inspection management device 300 or interrupting the input power of the making device 110 by the inspection management device 300.

Additionally, controlling the making device 110 into disabled state by the inspection management device 300 may comprise controlling to make use of a different making device 110 of the same type as the making device 110 in which the error signal was generated in the menu making process.

In relation to this, when the inspection management device 300 controls the making device 110 or the making booth 100 into disabled state, the inspection management device 300 may control the kiosk provided to allow customers to take orders in the cafe to output the disabled service message.

Here, controlling the kiosk to output the disabled service message may be understood as controlling to disallow customers from taking orders, and to this end, the inspection management device 300 may be connected to the kiosk via the wireless or wired network to transmit the disabled service signal, and in this case, the kiosk may be provided to output the disabled service message in response to the disabled service signal transmitted from the inspection management device 300.

Additionally, the inspection management device 300 may be connected via the wireless or wired network to the server connected to the kiosk via the wireless or wired network to transmit the disabled service signal, and in this case, the kiosk may be provided to receive the disabled service signal from the server and output the disabled service message in response to the received disabled service signal.

Meanwhile, when the management completion signal for the making device 110 switched to the disabled state is input, the inspection management device 300 may control to re-operate the corresponding making device 110.

Additionally, controlling the making booth 100 into disabled state by the inspection management device 300 may comprise controlling to power off the making device 110 provided in the making booth 100 by the inspection management device 300, or interrupting the input power of the making device 110 provided in the making booth 100 by the inspection management device 300.

In this instance, when the management completion signal for the making booth 100 switched to the disabled state is input, the inspection management device 300 may control to re-operate the making device 110 provided in the corresponding making booth 100.

In relation to this, when the making device management cycle for a making device 110 is generated and the measured elapsed time since the generation of the management completion signal for the making device 110 reaches the making device management cycle, the inspection management device 300 may control the corresponding making device 110 into disabled state.

Additionally, when the making booth management cycle for the making booth 100 is generated and the measured elapsed time since the generation of the management completion signal for the making booth 100 reaches the making booth management cycle, the inspection management device 300 may control the corresponding making booth 100 into disabled state.

Meanwhile, the inspection management device 300 may receive input of information such as weight and ratio used in the inspection management device 300 from the manager, or the inspection management device 300 may receive input information of the manager terminal device 400 such as weight and ratio from the manager terminal device 400.

The manager terminal device 400 may receive and output the error occurrence signal or the management request signal.

In this instance, the manager terminal device 400 may be replaced with an information processing device, for example, a smartphone, a tablet, a computer and a notebook, and accordingly, the manager terminal device 400 may be connected to the error control device 200 or the inspection management device 300 with the wireless or wired network.

In relation to this, in response to the error occurrence signal, the manager terminal device 400 may output the making device 110 in which the error signal was generated to allow the manager to see, and in this instance, the manager terminal device 400 may further output the time when the error signal was generated from the making device 110 according to the error information stored in the error control device 200 to allow the manager to see.

Additionally, in response to the inspection request signal transmitted from the error control device 200, the manager terminal device 400 may output the making device 110 in which the inspection request signal was generated to allow the manager to see, and in this instance, the manager terminal device 400 may further output the time interval elapsed since the generation of the previous error signal to allow the manager to see.

In this instance, the manager terminal device 400 may output an amount of time calculated by subtracting the elapsed time interval from the error cycle to allow the manager to see.

Additionally, in response to the management request signal, the manager terminal device 400 may output the making device 110 or the making booth 100 in which the management request signal was generated to allow the manager to see, and in this instance, the manager terminal device 400 may further output the elapsed time since the generation of the previous management completion signal to allow the manager to see.

In this instance, the manager terminal device 400 may output the amount of time calculated by subtracting the elapsed time from the management cycle to which the management request ratio was applied to allow the manager to see.

Meanwhile, the manager terminal device 400 may receive the management completion input for the making device 110 or the making booth 100 from the manager, and in this case, the manager terminal device 400 may generate the management completion signal for the making device 110 or the making booth and transmit it to the inspection management device 300.

Additionally, the manager terminal device 400 may receive input of information such as weight and ratio used in the error control device 200 or the inspection management device 300 from the manager, and in this case, the manager terminal device 400 may transmit the input information such as weight and ratio to the error control device 200 or the inspection management device 300.

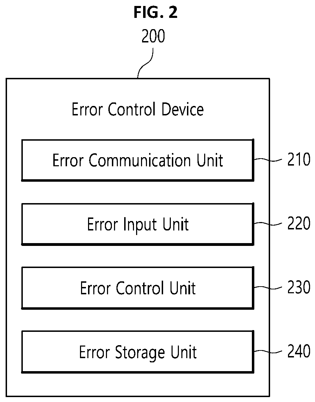

FIG. 2 is a control block diagram of the error control device of FIG. 1.

The error control device 200 may include an error communication unit 210, an error input unit 220, an error control unit 230 and an error storage unit 240.

The error communication unit 210 may receive the error signal generated by the malfunction of the making device 110.

The error input unit 220 may receive input of information such as weight and ratio used in the error control device 200 from the manager, or the error communication unit 210 may receive input information of the manager terminal device 400 such as weight and ratio from the manager terminal device 400.

The error control unit 230 may control the making device 110 into disabled state in response to the error signal, and the error control unit 230 may generate the error occurrence signal for the making device 110 having transmitted the error signal.

When the error signal is removed from the making device 110, the error control unit 230 may control to re-operate the corresponding making device 110.

When there is a plurality of making devices 110 of the same type, the error control unit 230 may generate the warning signal which is classified into at least one level according to the ratio of the number of making devices 110 in which the error signal was generated to the number of making devices 110.

The error control unit 230 may generate the warning signal by applying the preset weight to the ratio of the number of making devices 110 in which the error signal was generated to the number of making devices 110 of the same type.

The error control unit 230 may generate error information to indicate the making device 110 in which the error signal was generated and the time when the error signal was generated.

The error control unit 230 may calculate the error cycle indicating the time interval at which error signals are generated according to a plurality of adjacent error information generated in the same making device.

Accordingly, when the time interval elapsed since the generation of the previous error signal of the corresponding making device 110 reaches the error cycle, the error control unit 230 may generate the inspection request signal according to the calculated error cycle.

The error control device 200 may generate the error information to indicate the making device 110 in which the error signal was generated and the time when the error signal was generated, and the error storage device 240 may store the generated error information.

Additionally, the error storage unit 240 may further store information transmitted from the manager terminal device 400 and the time when the corresponding information was transmitted, and the error storage unit 240 may further store information transmitted from the making device 110 and the time when the corresponding information was transmitted.

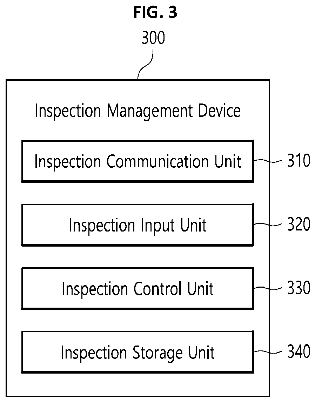

FIG. 3 is a control block diagram of the inspection management device of FIG. 1.

The inspection management device 300 may include an inspection communication unit 310, an inspection input unit 320, an inspection control unit 330 and an inspection storage unit 340.

The inspection communication unit 310 may receive input information of the manager terminal device 400 such as weight and ratio from the manager terminal device 400, or the inspection input unit 320 may receive input of information such as weight and ratio used in the inspection management device 300 from the manager.

The inspection input unit 320 may receive input of the management completion signal for the making device 110 from the manager.

Here, the inspection input unit 320 may be provided to receive input of the management completion signal for the making device 110 or the making booth 100 using the switch and the button, and additionally, the inspection communication unit 310 may receive the management completion signal from the manager terminal device 400 in response to the inspection completion input for the making device 110 or the making booth 100 from the manager terminal device 400.

The inspection control unit 330 may measure the elapsed time since the generation of the management completion signal and compare the elapsed time with the preset management cycle, and when the elapsed time reaches the time interval according to the management request ratio to the management cycle, the inspection control unit 330 may generate the management request signal.

The inspection control unit 330 may generate the management request signal which is classified into at least one level according to one or more different management request ratios.

The inspection control unit 330 may generate the making booth management cycle by applying the weight for the making booth 100 to the management cycle.

Accordingly, the inspection control unit 330 may measure the elapsed time since the generation of the management completion signal for the making booth 100 and compare the elapsed time with the making booth management cycle, and when the elapsed time reaches the time interval according to the management request ratio to the making booth management cycle, the inspection control unit 330 may generate the management request signal for the making booth 100.

The inspection control unit 330 may generate each making device management cycle according to the type of the making device 110 by applying the weight for the making device 110 to the management cycle.

Accordingly, the inspection control unit 330 may measure the elapsed time since the generation of the management completion signal for the making device 110 and compare the elapsed time with the making device management cycle, and when the elapsed time reaches the time interval according to the management request ratio to the making device management cycle, the inspection control unit 330 may generate the management request signal for the making device 110.

Meanwhile, when the measured elapsed time since the generation of the management completion signal for the making device 110 or the making booth 100 reaches the management cycle, the inspection control unit 330 may control the making device 110 or the making booth 100 into disabled state.

In this instance, when the management completion signal for the making device 110 or the making booth 100 switched to the disabled state is input, the inspection control unit 330 may control to re-operate the corresponding making device 110 or the corresponding making booth 100.

The inspection storage unit 340 may further store information transmitted from the manager terminal device 400 and the time when the corresponding information was transmitted, and the inspection storage unit 340 may further store information transmitted from the making device 110 and the time when the corresponding information was transmitted.

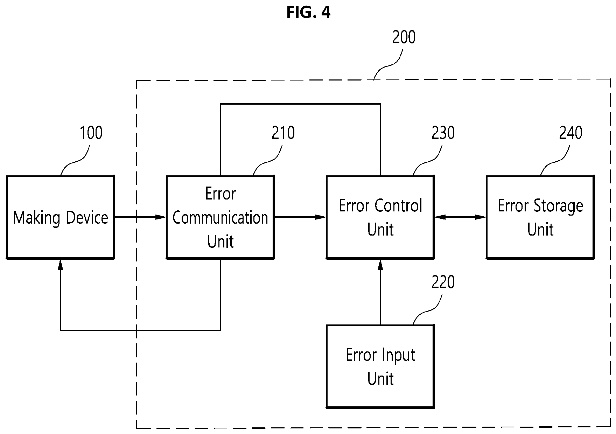

FIG. 4 is a block diagram showing a process of controlling the operating condition of the making device by the error control unit of FIG. 2.

Referring to FIG. 4, the error communication unit 210 may receive the error signal generated by the malfunction of the making device 110.

Accordingly, the error control unit 230 may control the making device 110 into disabled state in response to the error signal, and the error control unit 230 may generate the error occurrence signal for the making device 110 having transmitted the error signal.

When the error signal is removed from the making device 110, the error control unit 230 may control to re-operate the corresponding making device 110.

Meanwhile, the error control device 200 may generate the error information to indicate the making device 110 in which the error signal was generated and the time when the error signal was generated, and the error storage device 240 may store the generated error information.

Additionally, the error storage unit 240 may further store information transmitted from the manager terminal device 400 and the time when the corresponding information was transmitted, and the error storage unit 240 may further store information transmitted from the making device 110 and the time when the corresponding information was transmitted.

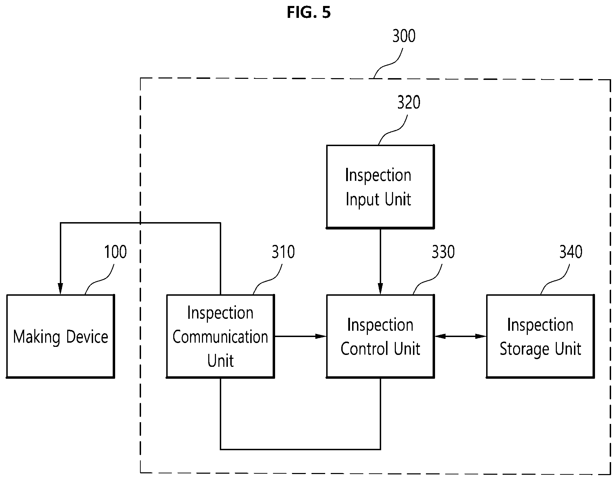

FIG. 5 is a block diagram showing a process of controlling the operating condition of the making device by the inspection control unit of FIG. 3.

Referring to FIG. 5, the inspection input unit 320 may receive input of the management completion signal for the making device 110 from the manager.

Here, the inspection input unit 320 may be provided to receive input of the management completion signal for the making device 110 or the making booth 100 using the switch and the button, and the inspection communication unit 310 may receive the management completion signal from the manager terminal device 400 in response to the inspection completion input for the making device 110 or the making booth 100 from the manager terminal device 400.

Accordingly, when the measured elapsed time since the generation of the management completion signal for the making device 110 or the making booth 100 reaches the management cycle, the inspection control unit 330 may control the making device 110 or the making booth 100 into disabled state.

In this instance, when the management completion signal for the making device 110 or the making booth 100 switched to the disabled state is input, the inspection control unit 330 may control to re-operate the corresponding making device 110 or the corresponding making booth 100.

The inspection storage unit 340 may further store information transmitted from the manager terminal device 400 and the time at which the corresponding information was transmitted, and the inspection storage unit 340 may further store information transmitted from the making device 110 and the time at which the corresponding information was transmitted.

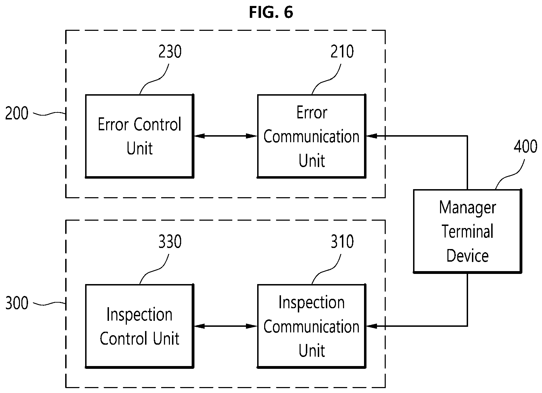

FIG. 6 is a block diagram showing a process of outputting the condition of the making device by the manager terminal device of FIG. 1.

Referring to FIG. 6, the error input unit 220 may receive input of information such as weight and ratio used in the error control device 200 from the manager, or the error communication unit 210 may receive input information of the manager terminal device 400 such as weight and ratio from the manager terminal device 400.

Additionally, the inspection communication unit 310 may receive input information of the manager terminal device 400 such as weight and ratio from the manager terminal device 400, or the inspection input unit 320 may receive input of information such as weight and ratio used in the inspection management device 300 from the manager.

Accordingly, when there is a plurality of making devices 110 of the same type, the error control unit 230 may generate the warning signal which is classified into at least one level according to the ratio of the number of making devices 110 in which the error signal was generated to the number of making devices 110.

The error control unit 230 may generate the warning signal by applying the preset weight to the ratio of the number of making devices 110 in which the error signal was generated to the number of making devices 110 of the same type.

The error control unit 230 may generate the error information to indicate the making device 110 in which the error signal was generated and the time when the error signal was generated.

The error control unit 230 may calculate the error cycle indicating the time interval at which error signals are generated according to a plurality of adjacent error information generated in the same making device.

Accordingly, the error control unit 230 may generate the inspection request signal according the calculated error cycle when the time interval elapsed since the generation of the previous error signal of the corresponding making device 110 reaches the error cycle.

Meanwhile, the inspection control unit 330 may measure the elapsed time since the generation of the management completion signal and compare the elapsed time with the preset management cycle, and when the elapsed time reaches the time interval according to the management request ratio to the management cycle, the inspection control unit 330 may generate the management request signal.

The inspection control unit 330 may generate the management request signal which is classified into at least one level according to one or more different management request ratios.

The inspection control unit 330 may generate the making booth management cycle by applying the weight for the making booth 100 to the management cycle.

Accordingly, the inspection control unit 330 may measure the elapsed time since the generation of the management completion signal for the making booth 100 and compare the elapsed time with the making booth management cycle, and when the elapsed time reaches the time interval according to the management request ratio to the making booth management cycle, the inspection control unit 330 may generate the management request signal for the making booth 100.

The inspection control unit 330 may generate each making device management cycle according to the type of the making device 110 by applying the weight for the making device 110 to the management cycle.

Accordingly, the inspection control unit 330 may measure the elapsed time since the generation of the management completion signal for the making device 110 and compare the elapsed time with the making device management cycle, and when the elapsed time reaches the time interval according to the management request ratio to the making device management cycle, the inspection control unit 330 may generate the management request signal for the making device 110.

Meanwhile, the manager terminal device 400 may receive and output the error occurrence signal or the management request signal.

In relation to this, in response to the error occurrence signal, the manager terminal device 400 may output the making device 110 in which the error signal was generated to allows the manager to see, and in this instance, the manager terminal device 400 may further output the time when the error signal was generated from the making device 110 according to the error information stored in the error control device 200 to allows the manager to see.

Additionally, in response to the inspection request signal transmitted from the error control device 200, the manager terminal device 400 may output the making device 110 in which the inspection request signal was generated to allow the manager to see, and in this instance, the manager terminal device 400 may further output the time interval elapsed since the generation of the previous error signal to allow the manager to see.

In this instance, the manager terminal device 400 may output the amount of time calculated by subtracting the elapsed time interval from the error cycle to allow the manager to see.

Additionally, in response to the management request signal, the manager terminal device 400 may output the making device 110 or the making booth 100 in which the management request signal was generated to allow the manager to see, and in this instance, the manager terminal device 400 may further output the elapsed time since the generation of the previous management completion signal to allow the manager to see.

In this instance, the manager terminal device 400 may output the amount of time calculated by subtracting the elapsed time from the management cycle to which the management request ratio was applied to allow the manager to see.

Meanwhile, the manager terminal device 400 may receive the management completion input for the making device 110 or the making booth 100 from the manager, and in this case, the manager terminal device 400 may generate the management completion signal for the making device 110 or the making booth and transmit it to the inspection management device 300.

Additionally, the manager terminal device 400 may receive input of information such as weight and ratio used in the error control device 200 or the inspection management device 300 from the manager, and in this case, the manager terminal device 400 may transmit the input information such as weight and ratio to the error control device 200 or the inspection management device 300.

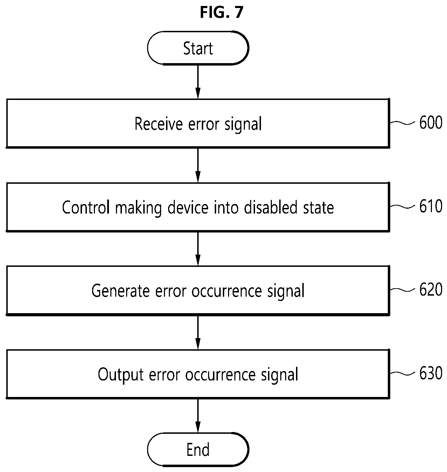

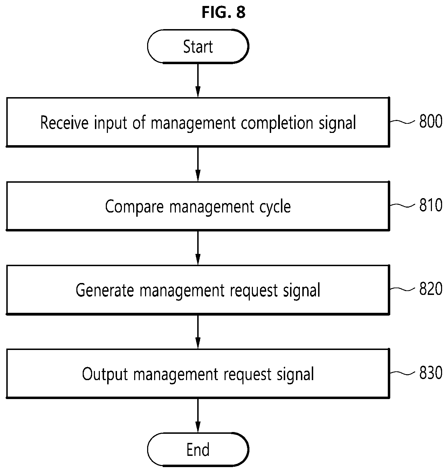

FIGS. 7 and 8 are flowcharts of an unmanned cafe management method according to an embodiment of the present disclosure.

The unmanned cafe management method according to an embodiment of the present disclosure is performed on substantially the same configuration as the unmanned cafe management system 1 shown in FIG. 1, and the same reference sign is given to the same element as the unmanned cafe management system 1 of FIG. 1, and redundant description is omitted.

Referring to FIG. 7, the unmanned cafe management method may include the steps of: receiving an error signal (600), controlling the making device into disabled state (610), generating an error occurrence signal (620) and outputting the error occurrence signal (630).

The step 600 of receiving the error signal may be a step in which the error communication unit 210 receives the error signal generated by the malfunction of the making device 110.

The step 610 of controlling the making device into disabled state may be a step in which the error control unit 230 controls the making device 110 into disabled state in response to the error signal.

The step 620 of generating the error occurrence signal may be a step in which the error control unit 230 generates the error occurrence signal for the making device 110.

The step 630 of outputting the error occurrence signal may be a step in which the manager terminal device 400 receives and outputs the error occurrence signal.

Referring to FIG. 8, the unmanned cafe management method may include the steps of: receiving input of a management completion signal (800), comparing a management cycle (810), generating a management request signal (820) and outputting the management request signal (830).

The step 800 of receiving the input of the management completion signal may be a step in which the inspection communication unit 310 receives the input of the management completion signal for the making device 110 from the manager.

The step 810 of comparing the management cycle may be a step in which the inspection control unit 330 measures the elapsed time since the generation of the management completion signal and compares the elapsed time with the preset management cycle.

The step 820 of generating the management request signal may be a step in which the inspection control unit 330 generates the management request signal when the elapsed time reaches the time interval according to the management request ratio to the management cycle.

The step 830 of outputting the management request signal may be a step in which the manager terminal device 400 receives and outputs the management request signal.

While the present disclosure has been hereinabove described with reference to the embodiments, those skilled in the art will understand that a variety of modifications and changes may be made thereto without departing from the spirit and scope of the present disclosure defined in the appended claims.

### [Detailed Description of Main Elements]

1: Unmanned cafe management system
100: Making booth
110: Making device
200: Error control device
300: Inspection management device
400: Manager terminal device

## Claims

1. An unmanned cafe management system, comprising:
a making device provided to make at least one type of menu;
an error control device to, when receiving an error signal generated by a malfunction of the making device, control the making device into disabled state in response to the error signal, and generate an error occurrence signal for the making device;
an inspection management device to receive input of a management completion signal for the making device from a manager, measure an elapsed time since generation of the management completion signal, compare the elapsed time with a preset management cycle, and generate a management request signal when the elapsed time reaches a time interval according to a management request ratio to the management cycle; and
a manager terminal device to receive and output the error occurrence signal or the management request signal.

2. The unmanned cafe management system according to claim 1, wherein the inspection management device controls the making device into the disabled state when the measured elapsed time since the generation of the management completion signal reaches the management cycle.

3. The unmanned cafe management system according to claim 1, wherein when there is a plurality of making devices of a same type, the error control device generates a warning signal which is classified into at least one level according to a ratio of the number of making devices in which the error signal was generated to the number of making devices.

4. The unmanned cafe management system according to claim 3, wherein the error control device presets a weight according to usage frequency for different types of making devices, and generates the warning signal by applying the weight to the ratio of the number of making devices in which the error signal was generated to the number of making devices.

5. The unmanned cafe management system according to claim 1, wherein the inspection management device presets a weight for a making booth in which a plurality of making devices is equipped, generates a making booth management cycle by applying the weight to the management cycle, measures the elapsed time since the generation of the management completion signal for the making booth, compares the elapsed time with the making booth management cycle, and generates the management request signal for the making booth when the elapsed time reaches the time interval according to the management request ratio to the making booth management cycle.

6. The unmanned cafe management system according to claim 1, wherein the inspection management device presets a weight according to usage frequency for different types of making devices, generates each making device management cycle according to the type of the making device by applying the weight to the management cycle, measures the elapsed time since the generation of the management completion signal for the making device, compares the elapsed time with the making device management cycle, and generates the management request signal for the making device when the elapsed time reaches the time interval according to the management request ratio to the making device management cycle.

7. The unmanned cafe management system according to claim 1, wherein the error control device generates error information to indicate the making device in which the error signal was generated and the time when the error signal was generated, and stores the generated error information.

8. The unmanned cafe management system according to claim 7, wherein the error control device calculates an error cycle indicating a time interval at which error signals are generated according to a plurality of adjacent error information generated in a same making device.

9. The unmanned cafe management system according to claim 8, wherein the error control device generates an inspection request signal according to the calculated error cycle when the time interval elapsed since generation of the previous error signal of the making device reaches the error cycle.

10. An unmanned cafe management method using a making device provided to make at least one type of menu, the unmanned cafe management method comprising:
receiving an error signal generated by a malfunction of the making device;
controlling the making device into disabled state in response to the error signal;
generating an error occurrence signal for the making device; and
receiving and outputting the error occurrence signal.

11. An unmanned cafe management method using a making device provided to make at least one type of menu, the unmanned cafe management method comprising:
receiving input of a management completion signal for the making device from a manager;
measuring an elapsed time since generation of the management completion signal, and comparing the elapsed time with a preset management cycle;
generating a management request signal when the elapsed time reaches a time interval according to a management request ratio to the management cycle; and
receiving and outputting the management request signal.

12. The unmanned cafe management method according to claim 11, wherein generating the management request signal comprises controlling the making device into disabled state when the measured elapsed time since the generation of the management completion signal reaches the management cycle.
